# EUROPÄISCHE PATENTSCHRIFT

(11) **EP 2 335 014 B1**
(45) Veröffentlichungstag und Bekanntmachung des Hinweises auf die Patenterteilung: **22.05.2013**
(21) Anmeldenummer: 09736191.9
(22) Anmeldetag: 08.10.2009
(51) Int. Cl.: G01B 11/16, C09D 5/18

(54) **VERFAHREN ZUR BESTIMMUNG VON FORMÄNDERUNGEN EINES WERKSTÜCKS**
METHOD FOR DETERMINING SHAPE CHANGES OF A WORKPIECE
PROCÉDÉ DE DÉTERMINATION DES CHANGEMENTS DE FORME D'UNE PIÈCE

(30) Priorität: 13.10.2008 DE 102008037442
(43) Veröffentlichungstag der Anmeldung: 22.06.2011
(73) Patentinhaber: ThyssenKrupp Steel Europe AG, 47166 Duisburg (DE)
(72) Erfinder: SIKORA, Sascha, 44534 Lünen (DE); MÖLLER, Karl-Heinz, 51674 Wiehl (DE); STRUPPEK, Thomas, 59368 Werne (DE)
(74) Vertreter: Cohausz & Florack
(86) Internationale Anmeldenummer: PCT/EP2009/063114
(87) Internationale Veröffentlichungsnummer: WO 2010/043541

(56) Entgegenhaltungen:
- DD-A1- 218 864
- JP-A- 1 104 670
- D. GARCIA, J.-J. ORTEU: "3D deformation measurement using stereo-correlation applied to experimental mechanics" THE 10TH FIG INTERNATIONAL SYMPOSIUM ON DEFORMATION MEASUREMENTS, März 2001 (2001-03), Seiten 50-60, XP002559301 Orange, Calif., USA

## Beschreibung

Die Erfindung betrifft ein Verfahren zur Bestimmung von Formänderungen eines Werkstücks aus Stahl oder einer Stahllegierung aufgrund einer Umformung, bei welchem auf das Werkstück eine Lackfarbe aufgebracht wird, das Werkstück umgeformt wird und anschließend eine optische Formänderungsanalyse unter Vermessung der aufgebrachten Lackfarbe erfolgt.

Die Bestimmung der Formänderung von Werkstücken nach Umformprozessen stellt eine wichtige Analyse zur Optimierung der Umformprozesse dar. Insbesondere können starke, lokale Belastungen des umgeformten Materials, beispielsweise wenn lokal große Umformungen auftreten, festgestellt und gegebenenfalls beseitigt werden. Zur Analyse der Umformprozesse werden unterschiedliche Verfahren eingesetzt. Beispielsweise ist bekannt durch Auftragung von Gitterlinien, Rastern oder Punktrastern aus Farbe oder entsprechenden Ätzungen der Oberfläche der umzuformenden Werkstücke Strukturen einzubringen, welche vor und nach der Umformung optisch analysiert werden, so dass die entsprechenden Umformgrade gemessen und dargestellt werden können. Ein entsprechendes Verfahren ist Beispielsweise aus "3D Deformation Measurement Using Stereo-Correlation Applied to Experimantal Mechanics" aus "The 10th FIG International Symposium on Deformation Measurements", XP-002559301 bekannt. Bekannt ist darüber hinaus aus der deutschen Patentschrift DD 218 864, auf metallische oder nichtmetallische Werkstoffoberflächen einen Lackfilm mit Konturen, Formen, Messnetzen oder Figuren aufzudrucken und diesen nach einer entsprechenden Umformung des Werkstücks zu vermessen. Die zunehmende Verwendung von höherfesten bzw. höchstfesten Stählen oder Stahllegierungen beispielsweise zur Erzielung von Gewichtseinsparungen aber auch zur Erzielung höherer Festigkeiten erfordert häufig die Anwendung einer Warmumformung der Werkstücke, um notwendige Umformgrade bereitzustellen. Ein Hitze beständiger Lack ist aus der japanischen Patentanmeldung JP 01104670 bekannt. Beim Warmumformen wird das aus einem Stahl oder einer Stahllegierung bestehende Werkstück auf Warmumformungstemperatur oberhalb von 850 °C erwärmt und in diesem Zustand umgeformt. Während oder unmittelbar nach der Umformung wird das Werkstück stark abgekühlt, so dass hochfeste Gefüge entstehen. Es hat sich herausgestellt, dass beim Warmumformen die bisher verwendeten Möglichkeiten zur Formänderungsanalyse nicht nutzbar sind. Aufgrund der hohen Temperaturen während der Warmumformung stellen weder das Auftragen eines Elektrolyts oder das Auftragen von bisher angebotenen Farben eine Möglichkeit dar, eine Formänderungsanalyse zu ermöglichen. Denn die Kontraste, welche zur optischen Analyse der Formänderung notwendig sind, waren bei den bisher bekannten Verfahren nach einer Warmumformung nicht mehr gegeben.

Der vorliegenden Erfindung liegt daher die Aufgabe zugrunde, ein Verfahren zur Bestimmung von Formänderungen eines Werkstücks aus Stahl oder einer Stahllegierung zur Verfügung zu stellen, welches auch für die Formänderungsanalyse eines Werkstücks nach einer Warmumformung geeignet ist.

Die oben aufgezeigt Aufgabe wird nach der Lehre der vorliegenden Erfindung dadurch gelöst, dass vor der Umformung des Werkstücks eine Lackfarbe mit einem Al-Anteil von mehr als 30 Gew.-% auf das Werkstück aufgetragen wird, das Werkstück zur Umformung auf eine Warmumformtemperatur erwärmt wird und das Werkstück nach oder während der Umformung abgekühlt wird.

Es hat sich gezeigt, dass die Verwendung von Lackfarben mit einem Aluminiumanteil von mehr als 30 Gew.-% auch nach einem Warmumformen einen für die Formänderungsanalyse notwendigen Kontrast bereitstellt, so dass auch warmumgeformte Werkstücke einer Formänderungsanalyse unterzogen werden können. Es wird davon ausgegangen, dass aufgrund des hohen Aluminiumanteils die Lackfarbe ohne Abplatzen auf dem Werkstück verbleibt und anschließend analysiert werden kann. Gute Ergebnisse im Hinblick auf die Verwendung der Lackfarbe auf einem Werkstück, welches warmumgeformt wird, werden mit Al-Anteilen zwischen 35 Gew.-% und 55 Gew.-% erzielt.

Eine weitere Verbesserung im Hinblick auf die Durchführung einer Formänderungsanalyse wird dadurch erreicht, dass gemäß einer ersten Ausgestaltung des erfindungsgemäßen Verfahrens die Lackfarbe unter Verwendung eines Siebdruckverfahrens oder unter Verwendung eines Druckstempels auf das Werkstück aufgebracht wird. Bei beiden Verfahren kann eine maximale Deckkraft der Lackfarbe erzielt werden. Zusätzlich ist die Genauigkeit der Muster beim Auftragen sehr groß. Darüber hinaus ergeben sich bei beiden Verfahren möglichst homogene Lackschichten, welche gleichmäßig auf das Werkstück aufgetragen werden können. Hierdurch wird die Genauigkeit der Formänderungsanalyse weiter gesteigert.

Gemäß einer weiteren Ausgestaltung des erfindungsgemäßen Verfahrens wird eine weiße Lackfarbe verwendet. Die weiße Lackfarbe ergibt einen besonders guten Kontrast für optische Messtechniken, welche einen möglichst hohen Kontrast zur Werkstückoberfläche benötigen. Es ist natürlich auch denkbar, eine helle mit hohen Weißanteilen versehene Farbe zu verwenden, um den gleichen Effekt zu erzielen.

Werden gemäß einer nächsten Ausgestaltung des erfindungsgemäßen Verfahrens Rasterpunkte und/oder Gitternetzlinien auf das Werkstück aufgebracht, kann eine flächendeckende Formänderungsanalyse nach dem Warmumformen erfolgen. Die Rasterpunkte können beispielsweise auch spezifisch an die Formänderungsbereiche angepasst werden und ergeben eine einfache Möglichkeit, beispielsweise durch Vermessen des Abstands der Gitternetzlinien oder der Rasterpunkte die Formänderung zu messen.

Schließlich wird das erfindungsgemäße Verfahren dadurch weiter verbessert, dass vor der Warmumformung das Werkstück auf eine Temperatur von mehr als 850 °C, vorzugsweise auf 880 °C bis 980 °C, erwärmt wird. Dies entspricht dem Bereich der Warmumformungstemperaturen, welche üblicherweise für höher- oder höchstfeste Stähle verwendet werden. Trotz der Umformung des Werkstücks bei derart hohen Temperaturen hat sich herausgestellt, dass in Verbindung mit der erfindungsgemäß verwendeten Lackfarbe die für die optische Formänderungsanalyse notwendigen Kontraste auf dem Werkstück erhalten bleiben.

Es gibt nun eine Vielzahl von Möglichkeiten das erfindungsgemäße Verfahren weiterzubilden und auszugestalten. Hierzu wird verwiesen einerseits auf die dem Patentanspruch 1 nachfolgenden Patentansprüche, andererseits auf die Beschreibung eines Ausführungsbeispiels.

Es wurden Untersuchungen an einem Werkstück durchgeführt, welches warmumgeformt wurde. Vor der Warmumformung wurde das Werkstück mit einer Lackfarbe unter Verwendung eines Siebdruckverfahrens bedruckt, wobei die Lackfarbe folgende Anteile in Gew.-% aufwies:
Al ca. 45%,
Si ca. 5%,
S ca. 2,5%,
V ca. 5%,
Ba ca. 10%.

Das Werkstück wurde auf 900 °C erwärmt und im Werkzeug bei dieser Temperatur umgeformt und unmittelbar stark abgekühlt. Nach der Warmumformung zeigte sich weiterhin ein sehr deutlicher Kontrast auf dem Werkstück, so dass die Formänderung des Werkstücks anhand von optischen Messinstrumenten gemessen werden konnte. Die guten Eigenschaften der Lackfarbe im Hinblick auf die Temperaturbeständigkeit und insbesondere auf die Beständigkeit gegenüber Warmumformungen wird auf den Aluminium-Anteil zurückgeführt, der in den Werkstoff einlegiert. Es wird davon ausgegangen, dass das Nichtabplatzen der erfindungsgemäßen Lackfarbe durch den Aluminiumanteil bedingt ist. Die Formänderungsanalyse von Werkstücken, welche warmumgeformt werden, ist vor allem wichtig bei der Herstellung von umgeformten Teilen aus höher- oder höchstfesten Stählen, welche ohne ein Warmumformen die notwendigen Umformgrade nicht erreichen. Mit dem erfindungsgemäßen Verfahren besteht daher die Möglichkeit, dass bisher einer Formänderungsanalyse nicht zugängliche Warmumformen entsprechend gut zu analysieren.

## Patentansprüche

1. Verfahren zur Bestimmung von Formänderungen eines Werkstücks aus Stahl oder einer Stahllegierung aufgrund einer Umformung, bei welchem auf das Werkstück eine Lackfarbe aufgebracht wird, das Werkstück umgeformt wird und anschließend eine optische Formänderungsanalyse unter Vermessung der aufgebrachten Lackfarbe erfolgt,
**dadurch gekennzeichnet, dass** vor der Umformung des Werkstücks eine Lackfarbe mit einem Al-Anteil von mehr als 30 Gew.-% auf das Werkstück aufgetragen wird, das Werkstück zur Umformung auf eine Warmumformtemperatur erwärmt wird und das Werkstück nach oder während der Umformung abgekühlt wird.

2. Verfahren nach Anspruch 1,
**dadurch gekennzeichnet, dass** die Lackfarbe unter Verwendung eines Siebdruckverfahrens oder unter Verwendung eines Druckstempels auf das Werkstück aufgebracht wird.

3. Verfahren nach Anspruch 1 oder 2,
**dadurch gekennzeichnet, dass** eine weiße Lackfarbe verwendet wird.

4. Verfahren nach einem der Ansprüche 1 bis 3,
**dadurch gekennzeichnet, dass** Rasterpunkte und/oder Gitternetzlinien auf das Werkstück aufgebracht werden.

5. Verfahren nach einem der Ansprüche 1 bis 4,
**dadurch gekennzeichnet, dass** vor der Warmumformung das Werkstück auf eine Temperatur von mehr als 850 °C, vorzugsweise auf 880 °C bis 980 °C, erwärmt wird.

## Claims

1. Method for determining shape changes of a workpiece made of steel or a steel alloy due to forming, in which a varnish is applied to the workpiece, the workpiece is formed and then an optical shape change analysis is carried out by measuring the applied varnish, **characterised in that**, before the forming of the workpiece a varnish with an Al proportion of more than 30% by weight is applied to the workpiece, the workpiece is heated for forming to a hot forming temperature and the workpiece is cooled after or during the forming.

2. Method according to claim 1, **characterised in that** the varnish is applied to the workpiece using a screen printing method or using a printing stamp.

3. Method according to claim 1 or 2, **characterised in that** a white varnish is used.

4. Method according to any one of claims 1 to 3, **characterised in that** screen dots and/or gridlines are applied to the workpiece.

5. Method according to any one of claims 1 to 4, **characterised in that** before the hot forming, the workpiece is heated to a temperature of more than 850°C, preferably to 880°C to 980°C.

## Revendications

1. Procédé pour la détermination de modifications de forme d'une pièce usinée en acier ou en un alliage d'acier en raison d'une déformation, dans lequel une peinture est appliquée sur la pièce usinée, la pièce usinée est déformée, puis une analyse optique de modification de forme est réalisée en mesurant la peinture appliquée,
**caractérisé en ce que**
une peinture avec une part d'aluminium supérieure à 30% en poids est appliquée sur la pièce usinée avant la déformation de la pièce usinée, la pièce usinée est chauffée à une température de déformation à chaud en vue de la déformation, et la pièce usinée est refroidie après ou pendant la déformation.

2. Procédé selon la revendication 1,
**caractérisé en ce que**
la peinture est appliquée sur la pièce usinée à l'aide d'un procédé de sérigraphie ou à l'aide d'un vérin presseur.

3. Procédé selon la revendication 1 ou 2,
**caractérisé en ce que**
une peinture blanche est utilisée.

4. Procédé selon l'une des revendications 1 à 3,
**caractérisé en ce que**
des points de quadrillage et/ou des lignes de grille sont appliqués sur la pièce usinée.

5. Procédé selon l'une des revendications 1 à 4,
**caractérisé en ce que**
la pièce usinée est chauffée à une température supérieure à 850°C, de préférence entre 880°C et 980°C, avant la déformation à chaud.
